# EUROPEAN PATENT SPECIFICATION

(11) **EP 2 905 132 B1**
(45) Date of publication and mention of the grant of the patent: **17.06.2020**
(21) Application number: 13844472.4
(22) Date of filing: 16.09.2013
(51) Int. Cl.: B32B 27/08, B32B 27/18, B32B 27/30, B32B 27/32, B32B 27/34, B32B 27/36, C09J 123/04, C09J 177/00, C09J 7/35, C09J 7/22, H01B 3/30, H01B 3/44

(54) **MULTILAYER THERMALLY RESTORABLE ARTICLE**
MEHRSCHICHTIGER, THERMISCH WIEDERHERSTELLBARER ARTIKEL
ARTICLE MULTICOUCHE THERMORESTAURABLE

(30) Priority: 01.10.2012 JP 2012218990
(43) Date of publication of application: 12.08.2015
(73) Proprietor: Sumitomo Electric Industries, Ltd., Chuo-ku Osaka-shi Osaka 541-0041 (JP); Sumitomo Electric Fine Polymer, Inc., Sennan-gun, Osaka 590-0458 (JP)
(72) Inventor: YAMASAKI, Satoshi, Osaka-shi Osaka 554-0024 (JP); NISHIKAWA, Shinya, Osaka-shi Osaka 554-0024 (JP); EMOTO, Yasutaka, Sennan-gun Osaka 590-0458 (JP); FUJITA, Ryouhei, Sennan-gun Osaka 590-0458 (JP)
(74) Representative: Boult Wade Tennant LLP
(86) International application number: PCT/JP2013/074954
(87) International publication number: WO 2014/054409

(56) References cited:
- EP-A1- 0 969 068
- EP-A1- 2 937 873
- EP-A2- 0 710 537
- WO-A1-99/35206
- CN-A- 1 789 362
- JP-A- H05 214 305
- JP-A- 2000 129 042
- JP-A- 2011 148 876
- US-A- 5 346 539
- US-A- 5 747 560
- US-B1- 6 548 587
- Anonymous: "Thermogravimetric analysis", , 19 February 2019 (2019-02-19), pages 1-5, XP055561761, Retrieved from the Internet: URL:https://en.wikipedia.org/wiki/Thermogr avimetric_analysis [retrieved on 2019-02-26]
- A Kowalczyk ET AL: "52340-1 Characterization of Complex Fluids at very Low Frequency: Experimental Verification of the Strain Rate-frequency Superposition (SRFS) Method", Appl. Rheol, vol. 20, no. 5, 1 January 2010 (2010-01-01), pages 52340-1, XP055561881, DOI: 10.3933/ApplRheol-20-52340

## Description

### Technical Field

The present invention relates to a multilayer thermally restorable article including an adhesive layer on an inner surface thereof.

### Background Art

Thermally restorable articles such as heat-shrinkable tubing and heat-shrinkable caps that have heat shrinkability in the radial direction are used in, for example, a connecting portion of insulated electric wires, a terminal treatment of wiring in various devices, coating of metal tubes for the purpose of obtaining properties such as waterproof and anticorrosion properties. For example, when a connecting portion of insulated electric wires is covered with a heat-shrinkable tube and heated, the heat-shrinkable tube is shrunk to conform to the shape of the connecting portion and closely adheres to the connecting portion. Thus, the connecting portion can be protected from external scratches and the like. In the case where high adhesiveness is required for a connecting portion for the purpose of obtaining a waterproof property etc., a heat-shrinkable tube with an adhesive, the heat-shrinkable tube including an adhesive layer on an inner surface thereof, is used. For example, PTL 1 describes a thermally restorable article in which an adhesive composition layer is formed on an inner surface thereof. The adhesive layer is composed of a hot-melt adhesive containing an ethylene-vinyl acetate copolymer (EVA), an ethylene-ethyl acrylate copolymer (EEA), a polyamide resin, or the like.

A heat-shrinkable tube including an adhesive layer is produced by respectively extruding an outer layer and an inner layer (adhesive layer) into a tube, then inflating (increasing the diameter of) the tube in the radial direction under heating, and conducting cooling to fix the shape of the tube. After the extrusion molding, the material of the outer layer may be cross-linked by irradiating with ionizing radiation. When the heat-shrinkable tube is used, the heat-shrinkable tube is arranged so as to cover the outside of a base to be treated, and heating is then performed so that the outer layer of the tube is thermally shrunk and, at the same time, the inner adhesive layer is allowed to flow to fill a gap between the base to be treated and the outer layer. Thus, the heat-shrinkable tube is made to closely adhere to the base. PTL 2 describes a heat-shrinkable tube including an adhesive layer constituted by two thermoplastic resin layers.

US 5, 346, 539 relates to a flame-retardant adhesive.

EP 0, 969, 068 relates to an adhesive resin composition and heat-shrinkable articles made by using the same.

### Citation List

### Patent Literature

PTL 1: Japanese Unexamined Patent Application Publication No. 2000-129042
PTL 2: Japanese Unexamined Patent Application Publication No. 8-230037

### Summary of Invention

### Technical Problem

High flowability is required for an adhesive layer used as an inner layer of a thermally restorable article because it is necessary that, when the adhesive layer is thermally shrunk, the adhesive layer easily closely adhere to an adherend to reliably obtain a filling property. However, when the flowability is excessively high, the shape of the adhesive layer is not stabilized when the thermally restorable article is formed by extrusion molding, resulting in an increase in the variation in the thickness of the adhesive layer. In particular, in the case where the adhesive layer has a small inner diameter, the space inside the adhesive layer is filled and a process for increasing the diameter may become difficult to perform.

The present invention has been made in view of the above problem. An object of the present invention is to provide a thermally restorable article which has a good filling property when thermally shrunk to reliably achieve good adhesiveness with a base to be treated, and in which the variation in the thickness of an adhesive layer during extrusion molding can be reduced.

### Solution to Problem

The present invention provides a multilayer thermally restorable article according to the claims appended hereto.

By incorporating a thermoplastic resin having a melt flow rate (MFR) of 15 g/10 min or more and 1,000 g/10 min or less at a temperature of 190°C and at a load of 2.16 kg in an adhesive resin composition, an adhesive layer having good flowability can be obtained, and adhesiveness to a base to be treated is improved when the adhesive layer is thermally shrunk. In addition, by incorporating an organically treated layered silicate in the adhesive composition and controlling a shear viscosity at a temperature of 150°C and at a shear rate of 0.1 s⁻¹ to 1,000 Pa·s or more, the flowability of the adhesive layer during extrusion molding can be suppressed and the variation in the thickness of the adhesive layer can be reduced.

### Advantageous Effects of Invention

According to the present invention, it is possible to obtain a thermally restorable article which has a good filling property when thermally shrunk to improve adhesiveness with a base to be treated, and in which the variation in the thickness of an adhesive layer during extrusion molding can be reduced.

### Brief Description of Drawing

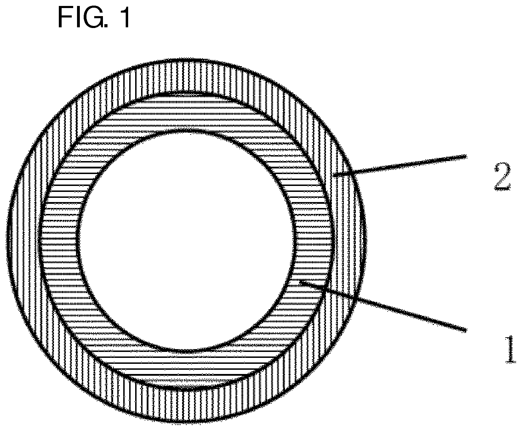

[Fig. 1] Figure 1 is a schematic cross-sectional view showing an example of a thermally restorable article of the present invention.

### Description of Embodiments

Figure 1 is a schematic cross-sectional view showing an example of a thermally restorable article of the present invention. The thermally restorable article includes a tubular adhesive layer 1 and an outer layer 2 disposed on an outer periphery of the adhesive layer 1. The adhesive layer 1 is composed of an adhesive composition containing a thermoplastic resin having a melt flow rate (MFR) of 15 g/10 min or more and 1,000 g/10 min or less at a temperature of 190°C and at a load of 2.16 kg and an organically treated layered silicate.

The MFR is an index that represents flowability of a resin and is measured at a temperature of 190°C and at a load of 2.16 kg by using an extrusion plastometer specified in JIS K6760 in accordance with JIS K7210. The thermoplastic resin having an MFR of 15 g/10 min or more and 1,000 g/10 min or less used in the adhesive composition is an ethylene-vinyl acetate copolymer and/or a polyamide. Examples of other thermoplastic resins include ethylene-ethyl acrylate copolymers (EEA), and saturated copolymerized polyesters. Any of these thermoplastic resins can be selected and used in accordance with the type of outer layer and the type of a base to be treated, although only ethylene-vinyl acetate copolymers and polyamides are in accordance with the present invention.

An adhesive composition prepared by using a thermoplastic resin having an MFR of more than 1,000 g/10 min has excessively high flowability, and thus it is difficult to stably extrude the adhesive composition. An adhesive composition prepared by using a thermoplastic resin having an MFR of less than 15 g/10 min has low flowability during thermal shrinkage. The MFR of the thermoplastic resin is more preferably 100 g/10 min or more and 800 g/10 min or less.

Among the above resins, ethylene-vinyl acetate copolymers and polyamides are used because good dispersibility of an organically treated layered silicate in these resins is obtained. Ethylene-vinyl acetate copolymers and polyamides are used alone or as a mixture thereof. Ethylene-vinyl acetate copolymers having a vinyl acetate content of 12% by mass or more and 46% by mass or less are particularly preferable. When the vinyl acetate content is 12% by mass or more, an organically treated layered silicate is easily dispersed in the resin. On the other hand, when the vinyl acetate content exceeds 46% by mass, sticking of the material occurs, resulting in a difficulty in handling.

The term "organically treated layered silicate" refers to a layered silicate (clay mineral, clay) such as montmorillonite, bentonite, or smectite that has been subjected to an organic treatment. An interlayer cation such as magnesium ion, sodium ion, or calcium ion is present between silicate planes that are stacked in layers, thus maintaining a layered crystal structure. This interlayer cation is exchanged for an organic cation by conducting the organic treatment. An organic compound is chemically bonded to surfaces of the silicate planes and introduced (intercalated) between layers. As a result, the interlayer distance between the silicate planes is increased, and dispersibility in thermoplastic resins is improved. The layered silicate may be a natural layered silicate or a synthesized layered silicate.

An organically treated layered silicate is dispersed in a thermoplastic resin to adjust the viscosity of an adhesive composition. A shear viscosity at a temperature of 150°C and at a shear rate of 0.1 s⁻¹ is adjusted to 1,000 Pa·s or more. Note that the viscosity is measured with a rotary rheometer.

When an adhesive composition passes through a die during extrusion molding, a high shear stress is applied to the adhesive composition and the adhesive composition has high flowability. However, after the adhesive composition passes through the die, the shear stress applied to the adhesive composition decreases.
In the case where the adhesive composition has a low viscosity in this state, the resulting adhesive layer is deformed after the adhesive composition passes through the die. As a result, the thickness of the adhesive layer may be varied and the space inside the adhesive layer may be filled. However, when the shear viscosity at a temperature of 150°C and at a shear rate of 0.1 s⁻¹ is adjusted to 1,000 Pa·s or more, the adhesive composition has a high viscosity immediately after passing through the die. Thus, the flow of the adhesive layer can be suppressed after the adhesive composition passes through the die, and the variation in the thickness can be reduced.

A shear viscosity of the adhesive composition at a temperature of 150°C and at a shear rate of 100 s⁻¹ is preferably 200 Pa·s or less. The reason for this is as follows. As described above, when the viscosity in a low-shear rate range is high, good extrusion moldability is obtained. However, if the viscosity in a high-shear rate range is also still high, the flowability of the adhesive composition during thermal shrinkage decreases and good adhesiveness is not obtained.

A loss on heating of the adhesive composition at 300°C is preferably 1% or more. The adhesive composition contains an organically treated layered silicate. When the organically treated layered silicate is heated to 300°C, an organic compound contained in the organically treated layered silicate is decomposed and the weight of the organically treated layered silicate is reduced. Therefore, the loss on heating at 300°C serves as an index of the amount of organic compound contained in the organically treated layered silicate. The amount of organic compound contained in the organically treated layered silicate is preferably 20% to 60%. An organically treated layered silicate having a low content of an organic compound has low dispersibility in a thermoplastic resin, and it is difficult to finely disperse the layered silicate. Herein, the loss on heating at 300°C is a value calculated as follows. A measurement is conducted with a thermal analysis device by increasing the temperature to 400°C at a rate of 10°C/min, and a reduction in the mass at 300°C is then calculated by using the mass at 50°C as a reference.

The incorporation of an organically treated layered silicate in an adhesive composition can be confirmed by the measurement of the loss on heating. Furthermore, since an organically treated layered silicate contains silicon (Si) and magnesium (Mg), the presence of Si and Mg may be confirmed by elemental analysis of the adhesive composition. The presence of the organically treated layered silicate can be confirmed by this method.

A storage modulus of the adhesive composition at 110°C is preferably 0.1 MPa or less. Herein, a vibration measurement is conducted with a rotary rheometer while changing a strain from 0.001% to 10%, and a value of the storage modulus at a strain of 0.1% is defined as the storage modulus. When the storage modulus is higher than 0.1 MPa, the shape of the adhesive layer is maintained even in the case where a stress is applied thereto, and thus the filling property of the adhesive layer at the time of shrinking of the outer layer degrades. When the storage modulus is 0.1 MPa or less, the adhesive layer easily melts at the time of shrinking of the outer layer, and thus the filling property of the adhesive layer at the time of shrinking of the outer layer is good.

A content of the organically treated layered silicate is appropriately adjusted so that a shear viscosity at a temperature of 150°C and at a shear rate of 0.1 s⁻¹ becomes 1,000 Pa·s or more. The organically treated layered silicate is contained in an amount of 1 part by mass or more and 20 parts by mass or less relative to 100 parts by mass of the thermoplastic resin from the viewpoint of satisfactorily adjusting the viscosity.

Satisfactory dispersion of an organically treated layered silicate in a thermoplastic resin can be determined by using, as an index, a transmittance of light having a wavelength of 850 nm. When the transmittance of light having a wavelength of 850 nm at an equivalent sheet thickness of 1.0 mm is 30% or more, it is assumed that the organically treated layered silicate is satisfactorily dispersed. In the case where a layered silicate that is not subjected to an organic treatment is used, the dispersibility of the layered silicate is not good. Therefore, in this case, it is assumed that the transmittance of light having a wavelength of 850 nm at an equivalent sheet thickness of 1.0 mm is less than 30%.

In the case where an adhesive composition has a black color as a result of mixing of a black filler such as carbon, the transmittance of light having a wavelength of 850 nm at an equivalent sheet thickness of 1.0 mm does not become 30% or more. However, when the equivalent sheet thickness is 0.05 mm, the transmittance of light having a wavelength of 850 nm becomes 20% or more.

Additives other than the thermoplastic resin and the organically treated layered silicate may be mixed in the adhesive composition. For example, an antioxidant, a colorant, a lubricant, a heat stabilizer, an ultraviolet absorber, etc. are used as the additives. These materials are mixed by using any mixer such as an open roll mill, a pressure kneader, a single-screw mixer, or a twin-screw mixer to prepare an adhesive composition.

Any material used in existing heat-shrinkable tubing can be used for the outer layer of the multilayer thermally restorable article. A resin composition constituting the outer layer contains at least one resin component selected from the group consisting of polyethylene, polyesters, polyamides, and fluororesins, and as required, a flame retardant, an antioxidant, a colorant, a lubricant, a heat stabilizer, an ultraviolet absorber, etc.

A resin composition constituting the outer layer and an adhesive composition constituting the adhesive layer are extruded by using a known melt extruder to obtain a multilayer extrusion-molded body. This multilayer extrusion-molded body is inflated so as to have a predetermined outer shape by, for example, introducing compressed air in the tube in a state where the multilayer extrusion-molded body is heated at a temperature of a melting point thereof or higher. Subsequently, the shape is fixed by cooling the inflated multilayer extrusion-molded body. Thus, a multilayer thermally restorable article is obtained. A multilayer thermally restorable article having good heat resistance is obtained by cross-linking the material of the outer layer after the extrusion molding. Examples of the cross-linking method that can be used include cross-linking by irradiation with ionizing radiation, chemical cross-linking, and thermal cross-linking.

The shape of the multilayer thermally restorable article can be appropriately designed. In general, at the time of extrusion molding (before inflation), the inner diameter of the outer layer is 1.0 to 30 mm, the wall thickness of the outer layer is 0.1 to 10 mm, the thickness of the adhesive layer is about 0.1 to 10 mm, and the inner diameter of the adhesive layer is about 0.1 to 8.5 mm. Since the multilayer thermally restorable article of the present invention is good in terms of extrusion moldability of the adhesive layer, extrusion molding can be satisfactorily performed even in the case where the inner diameter of the adhesive layer is small, specifically, 1.0 mm or less. Note that only an adhesive layer may be extruded into a tube, the extruded tube may be set inside an inflated outer layer tube, and the resulting tube may be shrunk and used.

The multilayer thermally restorable article of the present invention covers heat-shrinkable tubing and heat-shrinkable caps. The heat-shrinkable tubing has a tube shape. The heat-shrinkable tubing may have a large length or may be cut to have an appropriate length. The heat-shrinkable caps are obtained by cutting a heat-shrinkable tube to have an appropriate length, and shrinking an end of the resulting heat-shrinkable tube by heating to close the end.

### EXAMPLES

Next, the present invention will be described in more detail by using Examples. The Examples do not limit the scope of the present invention.

### (Examples 1 to 11, Reference Example 1, and Comparative Examples 1 to 9)

### (Preparation of adhesive composition and evaluation of extrusion moldability)

A thermoplastic resin, a filler, and an antioxidant that had the compositions shown in Tables I and II were melt-mixed to prepare adhesive compositions. Tubular two-layer extrusion molded bodies each including an inner layer (adhesive layer) composed of the adhesive composition and an outer layer composed of polyethylene having a melting point of 125°C were prepared. The outer layer had an inner diameter of 2.8 mm and a thickness of 0.9 mm. The inner layer (adhesive layer) had an inner diameter of 0.6 mm and a thickness of 1.0 mm. Air was introduced from an end of a sample prepared by cutting an extrusion molded body so as to have an appropriate length. When the flow of the air from the opposite end was confirmed, the sample was evaluated as acceptable. When the variation in the thickness of the adhesive layer is large, the inside of the tube is filled with an adhesive and completely closed, and thus air cannot flow through the tube.

### (Production of heat-shrinkable tube)

The extrusion molded body was irradiated with ionizing radiation to cross-link the outer layer. Subsequently, the extrusion molded body was inflated such that the outer diameter of the outer layer became 7.5 mm, and was then cooled to fix the shape thereof. Thus, a heat-shrinkable tube was obtained. Since the adhesive layer contains an antioxidant in an amount that does not cross-link the adhesive layer, cross-linking of the adhesive layer is inhibited.

### (Evaluation of heat-shrinkable tube: Waterproof test)

One insulated electric wire and four insulated electric wires were welded to prepare a harness, and a welded portion of the harness was covered with a heat-shrinkable tube. The harness was horizontally placed on a floor in a thermostatic chamber at 180°C, and heated for 90 seconds to shrink the heat-shrinkable tube. Thus, the heat-shrinkable tube is made to closely adhere to the welted portion. This sample was put in water and air at 200 kPa was blown from an end of the one insulated electric wire for 30 seconds. The occurrence or non-occurrence of the generation of bubbles in water was examined. When bubbles were not generated, the sample was evaluated as acceptable. When bubbles were generated, the sample was evaluated as unacceptable.

Only the inner layer (adhesive layer) was obtained by separating the outer layer from the heat-shrinkable tube, and a series of evaluations was conducted as described below.

### (Measurement of shear viscosity)

Shear viscosities at a temperature of 150°C were measured by using a rotary rheometer (RCM302, manufactured by Anton Paar). A shear viscosity at a shear rate of 0.1 s⁻¹ was defined as a shear viscosity 1, and a shear viscosity at a shear rate of 100 s⁻¹ was defined as a shear viscosity 2.

### (Measurement of storage modulus)

A vibration measurement was conducted while changing a strain from 0.001% to 10% by using a rotary rheometer (RCM302, manufactured by Anton Paar). A storage modulus at a strain of 0.1% was measured.

### (Measurement of loss on heating at 300°C)

A loss on heating of the prepared adhesive composition was measured with a thermal analysis device. The temperature was increased from room temperature to 400°C at a rate of 10°C/min. A reduction in the mass at 300°C was calculated by using the mass at 50°C as a reference.

### (Measurement of transmittance)

An adhesive composition was pressed at a temperature of 150°C to prepare a sheet having a thickness of 1.0 mm. A transmittance of light having a wavelength of 850 nm was measured by using a spectrophotometer. The adhesive compositions of Example 10 and Comparative Example 8 contained carbon black and had a black color. Therefore, a sheet having a thickness of 0.05 mm was prepared, and the transmittance of light was measured in the same manner.

### (Elemental analysis)

Elemental analysis of the adhesive composition was performed by energy-dispersive X-ray spectroscopy. Among Mg, Si, and Ca, elements contained in the adhesive composition were detected. The results of the evaluation are shown in Tables I and II.

**[Table I]**

| | | Example 1 | Example 2 | Example 3 | Example 4 | Example 5 | Example 6 | Example 7 | Example 8 | Example 9 | Example 10 | Reference Example 1 | Example 11 |
|---|---|---|---|---|---|---|---|---|---|---|---|---|---|
| Composition | EVA 1 | 100 | 50 | | 100 | 100 | 100 | 100 | 100 | 100 | 100 | | 100 |
| | EVA 2 | | 50 | | | | | | | | | | |
| | EVA 3 | | | 100 | | | | | | | | | |
| | EVA 4 | | | | | | | | | | | 100 | |
| | Polyethylene | | | | | | | | | | | | |
| | Organically treated layered silicate 1 | 15 | 15 | 15 | 1 | 2 | 20 | | | | 15 | 15 | 50 |
| | Organically treated layered silicate 2 | | | | | | | 15 | 2 | | | | |
| | Organically treated swelling mica | | | | | | | | | 15 | | | |
| | Layered silicate | | | | | | | | | | | | |
| | Calcium carbonate | | | | | | | | | | | | |
| | Wollastonite | | | | | | | | | | | | |
| | Talc | | | | | | | | | | | | |
| | Carbon black | | | | | | | | | | 0.2 | | |
| Evaluation | Extrudability | Acceptable | Acceptable | Acceptable | Acceptable | Acceptable | Acceptable | Acceptable | Acceptable | Acceptable | Acceptable | Acceptable | Acceptable |
| | Shear visoosity 1 | 5,500 | 4,200 | 5,400 | 1.300 | 2,200 | 6,800 | 5,300 | 2,100 | 4,600 | 5,600 | 5,700 | 11,200 |
| | Shear viscosity 2 | 160 | 120 | 170 | 150 | 150 | 190 | 160 | 140 | 170 | 160 | 2,200 | 1,050 |
| | Storage modulus | 0.041 | 0.034 | 0.042 | 0.011 | 0.015 | 0.049 | 0.04 | 0.012 | 0.038 | 0.042 | 0.039 | 0.162 |
| | Loss on heating | 3.2 | 4.3 | 3.5 | 1.1 | 1.4 | 3.9 | 3.3 | 1.2 | 3.5 | 3.1 | 3.5 | 7.5 |
| | Transmittance 1 | 47 | 49 | 48 | 63 | 58 | 38 | 47 | 57 | 38 | - | 38 | 18 |
| | Transmittance 2 | - | - | - | - | - | - | - | - | - | 29 | - | - |
| | Waterproof test | Acceptable | Acceptable | Acceptable | Acceptable | Acceptable | Acceptable | Acceptable | Acceptable | Acceptable | Acceptable | Unacceptable | Unacceptable |
| | Elemental detection | Si, Mg | Si, Mg | Si, Mg | Si, Mg | Si, Mg | Si, Mg | Si, Mg | Si, Mg | Si Mg | Si, Mg | Si, Mg | Si, Mg |

**[Table II]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Composition | EVA 1 | 100 | | | 100 | 100 | 100 | 100 | 100 | 100 |
| | EVA 2 | | | | | | | | | |
| | EVA 3 | | | | | | | | | |
| | EVA 4 | | 100 | | | | | | | |
| | Polyethylene | | | 100 | | | | | | |
| | Organically treated layered silicate 1 | | | 15 | | | | | | |
| | Organically treated layered silicate 2 | | | | | | | | | |
| | Organically treated swelling mica | | | | | | | | | |
| | Layered silicate | | | | 15 | | | | 15 | 50 |
| | Calcium carbonate | | | | | 15 | | | | |
| | Wdtastonite | | | | | | 15 | | | |
| | Talc | | | | | | | 15 | | |
| | Carbon black | | | | | | | | 0.2 | |
| Evaluation | Extrudability | Unacceptable | Acceptable | Unacceptable | Unacceptable | Unacceptable | Unacceptable | Unacceptable | Unacceptable | Unacceptable |
| | Shear viscosity 1 | 180 | 2,300 | 260 | 190 | 210 | 200 | 220 | 190 | 430 |
| | Shear viscosity 2 | 150 | 1,850 | 150 | 160 | 150 | 160 | 160 | 170 | 380 |
| | Storage modulus | 0.004 | 0,005 | 0.012 | 0.005 | 0.004 | 0.009 | 0,005 | 0.005 | 0.005 |
| | Loss on heating | 0.2 | 0.2 | 3.5 | 0.3 | 0.4 | 0.3 | 0.3 | 0.3 | 0.5 |
| | Transmittance 1 | 76 | 71 | 35 | 3 | 2 | 1 | 2 | - | 1 |
| | Transmittance 2 | - | - | - | - | - | - | - | 13 | - |
| | Waterproof test | - | Unacceptable | - | - | - | - | - | - | Unacceptable |
| | Elemental detection | - | - | Si, Mg | Si, Mg | Ca | Si, Ca | Si, Mg | Si, Mg | Si, Mg |

| | | | | | | | | | | |
|---|---|---|---|---|---|---|---|---|---|---|
| (Footnote) EVA 1: Ethylene-vinyl acetate copolymer having an MFR of 150 g/10 min and a vinyl acetate content of 28% by mass EVA 2: Ethylene-vinyl acetate copolymer having an MFR of 800 g/10 min and a vinyl acetate content of 28% by mass EVA 3: Ethylene-vinyl acetate copolymer having an MFR of 150 g/10 min and a vinyl acetate content of 19% by mass EVA 4: Ethylene-vinyl acetate copolymer having an MFR of 2 g/10 min and a vinyl acetate content of 5% by mass Polyethylene: Low-density polyethylene having an MFR of 145 g/10 min and a density of 0.915 Organically treated layered silicate 1: Layered silicate treated with dimethyl distearyl ammonium chloride, Organically treated layered silicate 2: Layered silicate treated with benzyl dimethyl stearyl ammonium chloride Organically treated swelling mica: Synthetic fluorine mica treated with dimethyl distearyl ammonium chloride, the synthetic fluorine mica being synthesized from talc Layered silicate: Layered silicate used in the organically treated layered silicate 1 Calcium carbonate: Hakuenka CCR, manufactured by Shiraishi Calcium Kaisha, Ltd. Wollastonite: SH1800, manufactured by Kinsei Matec Co., Ltd. Talc: MICRO ACE SG 95 manufactured by Nippon Talc Co., Ltd. Carbon Black: Carbon black having an arithmetic mean diameter of 24 nm, a nitrogen adsorption specific surface area of 93 m²/g, and a bulk density of 360 kg/m³ | | | | | | | | | | |

The adhesive compositions of Examples 1 to 10 had good extrusion moldability and passed the waterproof test. These adhesive compositions contained an organically treated layered silicate in an amount of 1 part by mass or more and 20 parts by mass or less relative to 100 parts by mass of a resin. The shear viscosity of each of the adhesive compositions at a shear rate of 0.1 s⁻¹ was 1,000 Pa·s or more and the shear viscosity of each of the adhesive compositions at a shear rate of 100 s⁻¹ was 200 Pa·s or less. These results show that the adhesive compositions of the present invention have not only good extrusion moldability but also good filling property (waterproof property).

In all of Examples 1 to 10, Si and Mg were detected in the elemental analysis. Except for the adhesive composition of Example 10, in all the adhesive compositions having a thickness of 1.0 mm, the transmittance of light having a wavelength of 850 nm was 30% or more. These results show that the organically treated layered silicate is satisfactorily dispersed. The adhesive composition of Example 10 had a transmittance of 20% or more at a thickness of 0.05 mm.

The adhesive compositions of Example 11 and Reference Example 1 had slightly high shear viscosities at a shear rate of 100 s⁻¹ and did not pass the waterproof test. Example 11 is not in accordance with the present invention. However, it is assumed that the flowability of the adhesive layer during thermal shrinkage becomes good under the condition that the adhesive layer has a large thickness or the heat shrinking temperature is high, and thus these adhesive compositions can be used in some cases.

The adhesive compositions of Comparative Examples 1 and 2 did not contain an organically treated layered silicate. Regarding Comparative Example 1, the viscosity at a low shear rate was excessively low, and extrusion moldability was unacceptable. Regarding Comparative Example 2, although extrusion moldability was satisfactory, the flowability of the resin was poor and Comparative Example 2 did not pass the waterproof test. Regarding Comparative Example 3, although an organically treated layered silicate was contained, the shear viscosity at a shear rate of 0.1 s⁻¹ was low and extrusion moldability was unacceptable.

The adhesive compositions of Comparative Examples 4 to 9 did not contain an organically treated layered silicate but contained an inorganic filler. Regarding each of Comparative Examples 4 to 9, the shear viscosity at a shear rate of 0.1 s⁻¹ was low, and extrusion moldability was unacceptable. Furthermore, in each of Comparative Examples 4 to 9, the transmittance of light having a wavelength of 850 nm was less than 30%. These results show that inorganic fillers that were not subjected to an organic treatment had poor dispersibility in a thermoplastic resin. Regarding Comparative Example 9, in which the content of an inorganic filler (layered silicate) was high, although the shear viscosity at a shear rate of 0.1 s⁻¹ was higher than that of Comparative Example 8, extrusion moldability was unacceptable and insufficient. On the other hand, the shear viscosity at a shear rate of 100 s⁻¹ became high and thus the adhesive composition of Comparative Example 9 did not pass the waterproof test.

### Reference Signs List

- 1: adhesive layer
- 2: outer layer

## Claims

1. A multilayer thermally restorable article comprising:
an adhesive layer (1) composed of an adhesive composition that contains a thermoplastic resin having a melt flow rate of 15 g/10 min or more and 1,000 g/10 min or less at 190°C and at a load of 2.16 kg, the melt flow rate being measured using an extrusion plastometer specified in JIS K6760 in accordance with JIS K7210, and an organically treated layered silicate, and that has a shear viscosity of 1,000 Pa·s or more at a temperature of 150°C and at a shear rate of 0.1 s⁻¹, the shear viscosity being measured with a rotary rheometer; and
an outer layer (2) disposed on an outer periphery of the adhesive layer (1),
wherein:
a content of the organically treated layered silicate is 1 part by mass or more and 20 parts by mass or less relative to 100 parts by mass of the thermoplastic resin; and
the thermoplastic resin is an ethylene-vinyl acetate copolymer and/or a polyamide.

2. The multilayer thermally restorable article according to Claim 1, wherein a shear viscosity of the adhesive composition at a temperature of 150°C and at a shear rate of 100 s^{- 1} is 200 Pa·s or less.

3. The multilayer thermally restorable article according to any one of Claims 1 and 2, wherein a transmittance of light having a wavelength of 850 nm at an equivalent sheet thickness of 1.0 mm of the adhesive composition is 30% or more.

4. The multilayer thermally restorable article according to any one of Claims 1 and 2, wherein the adhesive composition has a black color, and a transmittance of light having a wavelength of 850 nm at an equivalent sheet thickness of 0.05 mm of the adhesive composition is 20% or more.

5. The multilayer thermally restorable article according to any one of Claims 1 to 4, wherein the outer layer (2) is composed of a resin composition containing at least one resin component selected from the group consisting of polyethylene, polyesters, polyamides, and fluororesins.

## Patentansprüche

1. Mehrschichtiger, thermisch wiederherstellbarer Artikel, umfassend:
eine Klebeschicht (1), bestehend aus einer Klebezusammensetzung, die einen thermoplastischen Harz mit einer Schmelzflussrate von 15 g/10 min oder mehr und 1.000 g/10 min oder weniger bei 190 °C und bei einer Last von 2,16 kg enthält, wobei die Schmelzflussrate unter Verwendung eines Extrusionsplastomers gemessen wird, spezifiziert in JIS K6760 in Übereinstimmung mit JIS K7210, und einem organisch behandelten Schichtsilikat, und die eine Scherviskosität von 1.000 Pa·s oder mehr bei einer Temperatur von 150 °C und bei einer Scherrate von 0,1 s⁻¹ aufweist, wobei die Scherviskosität mit einem Rotationsrheometer gemessen wird;
und
eine äußere Schicht (2), angeordnet auf einem äußeren Umfang der Klebeschicht (1), wobei:
ein Gehalt des organisch behandelten Schichtsilikats 1Massenanteil oder mehr und 20 Massenanteile oder weniger relativ zu 100 Massenanteilen des thermoplastischen Harzes beträgt; und
es sich bei dem thermoplastischen Harz um ein Ethylen-Vinylacetat-Copolymer und/oder ein Polyamid handelt.

2. Mehrschichtiger, thermisch wiederherstellbarer Artikel gemäß Anspruch 1, wobei eine Scherviskosität der Klebezusammensetzung bei einer Temperatur von 150 °C und bei einer Scherrate von 100 s⁻¹ 200 Pa·s oder weniger beträgt.

3. Mehrschichtiger, thermisch wiederherstellbarer Artikel gemäß einem der Ansprüche 1 und 2, wobei eine Durchlässigkeit von Licht mit einer Wellenlänge von 850 nm bei einer entsprechenden Folienstärke von 1,0 mm der Klebezusammensetzung 30 % oder mehr beträgt.

4. Mehrschichtiger, thermisch wiederherstellbarer Artikel gemäß einem der Ansprüche 1 und 2, wobei die Klebezusammensetzung eine schwarze Farbe aufweist und eine Durchlässigkeit von Licht mit einer Wellenlänge von 850 nm bei einer entsprechenden Folienstärke von 0,05 mm der Klebezusammensetzung 20 % oder mehr beträgt.

5. Mehrschichtiger, thermisch wiederherstellbarer Artikel gemäß einem der Ansprüche 1 bis 4, wobei die äußere Schicht (2) aus einer Harzzusammensetzung besteht, die mindestens einen Harzbestandteil enthält, ausgewählt aus der Gruppe, bestehend aus Polyethylen, Polyestern, Polyamiden und Fluorharzen.

## Revendications

1. Article thermiquement restaurable multicouche comprenant :
une couche adhésive (1) constituée d'une composition adhésive qui contient une résine thermoplastique présentant un indice de fluidité de 15 g/10 min ou supérieur et de 1 000 g/10 min ou inférieur à 190°C et à une charge de 2,16 kg, l'indice de fluidité étant mesuré en utilisant un plastomètre d'extrusion spécifié dans JIS K6760 selon JIS K7210, et un silicate lamellaire organiquement traité, et qui présente une viscosité de cisaillement de 1 000 Pa.s ou supérieure à une température de 150°C et une vitesse de cisaillement de 0,1 s⁻¹, la viscosité de cisaillement étant mesurée avec un rhéomètre rotatif ; et
une couche externe (2) disposée sur une périphérie externe de la couche adhésive (1),
dans lequel :
une teneur du silicate lamellaire organiquement traité est de 1 partie en masse ou supérieure et de 20 parties en masse ou inférieure par rapport à 100 parties en masse de la résine thermoplastique ; et
la résine thermoplastique est un copolymère d'éthylène-acétate de vinyle et/ou un polyamide.

2. Article thermiquement restaurable multicouche selon la revendication 1, dans lequel une viscosité de cisaillement de la composition adhésive à une température de 150°C et à une vitesse de cisaillement de 100 s⁻¹ est de 200 Pa.s ou inférieure.

3. Article thermiquement restaurable multicouche selon l'une quelconque des revendications 1 et 2, dans lequel une transmission de lumière ayant une longueur d'onde de 850 nm à une épaisseur de feuille équivalente de 1,0 mm de la composition adhésive est de 30 % ou supérieure.

4. Article thermiquement restaurable multicouche selon l'une quelconque des revendications 1 et 2, dans lequel la composition adhésive présente une couleur noire, et une transmission de lumière ayant une longueur d'onde de 850 nm à une épaisseur de feuille équivalente de 0,05 mm de la composition adhésive est de 20 % ou supérieure.

5. Article thermiquement restaurable multicouche selon l'une quelconque des revendications 1 à 4, dans lequel la couche externe (2) est constituée d'une composition de résine contenant au moins un constituant de résine choisi dans le groupe consistant en polyéthylène, polyesters, polyamides, et fluororésines.
